# EUROPEAN PATENT APPLICATION

(11) **EP 2 669 719 A1**
(43) Date of publication of application: **04.12.2013**
(21) Application number: 13168182.7
(22) Date of filing: 17.05.2013
(51) Int. Cl.: G02B 5/32, G02B 27/14, G02B 27/22

(54) **Multi-viewer three-dimensional display having a holographic diffuser**

(30) Priority: 29.05.2012 US 201213482185
(71) Applicant: Delphi Technologies, Inc., Troy, MI 48007 (US)
(72) Inventor: Loong, Daniel Leong Woon, 822202 Singapore (SG); Kuhlman, Frederick F., Kokomo, IN 46902 (US)
(74) Representative: Robert, Vincent

(57) **Abstract**

Multiple-viewer display (12), e.g. for a vehicle, offering one or more perspectives of a plurality of scenes towards a corresponding plurality of locations (26, 28) in order to provide each of a corresponding plurality of persons (16, 20, 54) with a distinct two-dimensional or three-dimensional image (14, 18). The display (12) includes a single projector (30) projecting said perspectives towards a mirror system (38) reflecting the perspectives projected by the single projector (30) towards a holographic diffuser (34). The mirror system (38) comprises either a plurality of fixed or articulated mirrors (40, 42, 44).

## Description

### TECHNICAL FIELD OF INVENTION

This disclosure generally relates to multiple viewer three-dimensional (3D) display, and more particularly relates to using a holographic diffuser to display distinct 2D or 3D images to persons viewing the display from distinct locations without special glasses.

### BACKGROUND OF INVENTION

Three dimension (3D) displays using specialized glasses are known. A way to display 3D images without using specialized glasses is described in United States Patent Application Serial Number 13/282,333 filed October 27, 2011 by Leong et al. and titled AUTOSTEROSCOPIC 3D DISPLAY. There is a desire to provide displays in vehicles that can show distinct images to different persons in the vehicle. For example, and display that can show navigation information to a driver or operator of the vehicle, and a movie or other visual entertainment to a passenger of the vehicle.

### SUMMARY OF THE INVENTION

In accordance with one embodiment, a multiple viewer display is provided. The display is configured to display one or more perspectives of a plurality of scenes toward a corresponding plurality of locations in order to provide each of a corresponding plurality of persons viewing the display a distinct two-dimensional (2D) or three-dimensional (3D) image. The display includes a single projector, a holographic diffuser, and a mirror arrangement. The single projector is configured to project the one or more perspectives of the plurality of scenes into a projection field. The holographic diffuser is configured to display the one or more perspectives of the plurality of scenes projected by the single projector. The mirror arrangement is positioned in the projection field and configured to reflect the one or more perspectives of the plurality of scenes projected by the single projector toward the holographic diffuser from distinct directions. The distinct directions are such that a distinct 2D or 3D image is perceived by each of the plurality of persons viewing the display from distinct locations.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle interior equipped with a multiple viewer display in accordance with one embodiment; and

Fig. 2 is a diagram of the display of Fig. 1 in accordance with one embodiment.

### DETAILED DESCRIPTION

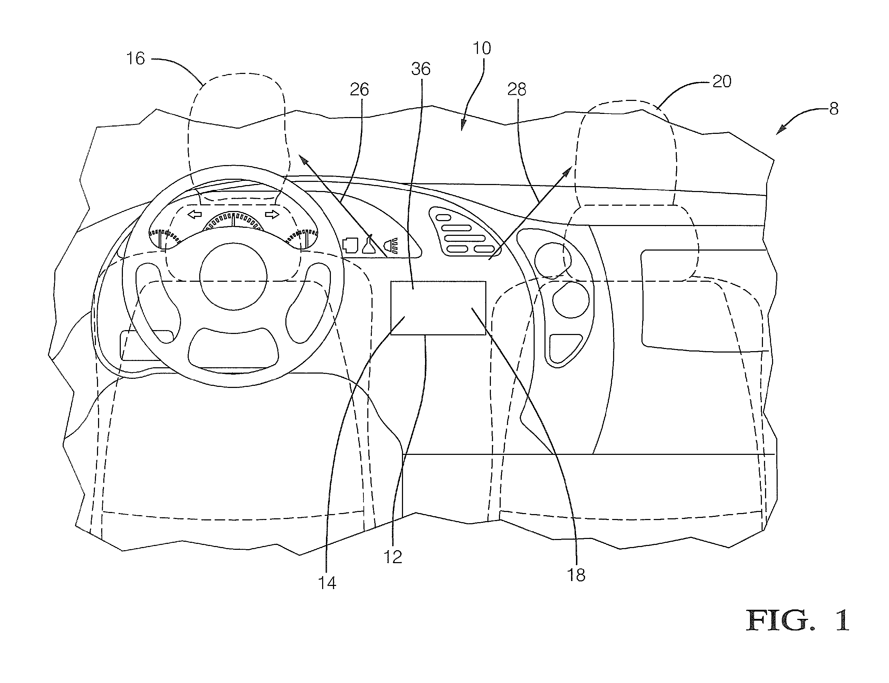

Fig. 1 illustrates a non-limiting example of a vehicle 10 equipped with a multiple viewer display, hereafter the display 12. In general, the display 12 is configured to display a first image 14 characterized as a two-dimensional (2D) or three-dimensional (3D) image toward a first person 16, for example a driver of the vehicle 10, and display a second image 18 distinct from the first image 14 and characterized as a two-dimensional (2D) or three-dimensional (3D) image toward a second person 20, for example a passenger of the vehicle 10. In more general terms, the display 12 may project the first image 14 toward a first location indicated by a first arrow, hereafter referred to as the first location 26, and project the second image 18 toward a second location indicated by a second arrow, hereafter referred to as the second location 28.

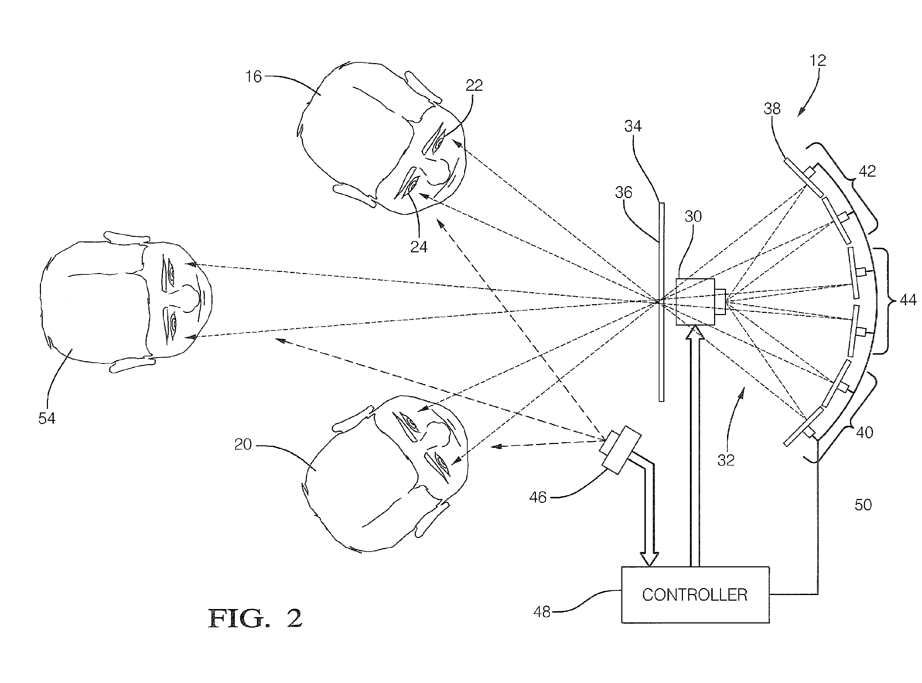

If the first image 14 is a 3D image, then the display 12 may project distinct perspectives of a scene so that the left eye 22 (Fig. 2) of the first person 16 receives a perspective of a scene that is distinct from a different perspective of the same scene projected to the right eye 24. The two perspectives of the scene cooperate to form an autostereoscopic image of the scene. As used herein, an image of a scene may be formed of one or more perspectives or perspective views of the scene. The scene may be based on an actual object or synthesized object. Projecting an autostereoscopic image of a scene provides a viewer with an illusion that what is being shown on a relatively flat display has three dimensional characteristics, as is known in the art. If the first image 14 is a 2D image, then the display 12 may project the same perspective of a scene so the left eye 22 and the right eye 24 receive the same perspective, and so no illusion of three dimensions is provided. The same 3D or 2D effect can be applied to the second image 18, or any number of additional images of scenes that the display 12 is able to accommodate.

It is recognized that when the first image 14 includes only two perspectives of a particular scene, e.g a first perspective for the left eye 22 and a second perspective for the right eye 24, then the first person 16 would have to position his eyes near a particular location to perceive the autostereoscopic 3D effect. However, as will be described in more detail below, the first image 14 may include an array of perspectives so that as the first person 16 moves about (e.g. up/down or left/right), the perspective of the first image 14 perceived by the first person 16 appears to change accordingly. As such, and as will be described in more detail below, the display 12 is generally configured to display one or more perspectives of a plurality of scenes toward a corresponding plurality of locations (26, 28) in order to provide each of a corresponding plurality of persons (16, 20) viewing the display 12 a 2D or 3D image (14, 18). It is further recognized that the display 12 may project distinct images to more than two persons, for example to a third person 54 residing in the back seat of the vehicle 10 and having a view of the display 12 comparable to that suggested by Fig. 1.

Fig. 2 illustrates a non-limiting example of the display 12 that includes a single projector 30 configured to project the one or more perspectives of the plurality of scenes into a projection field 32. As used herein, single projector means an image projection device having a single optical path or opening for light to emit from the single projector 30, and so specifically excludes displays that rely on multiple projectors to project the first image 14 and the second image 18. As such, the configuration of display 12 is advantageous over displays and systems that rely on multiple projectors at least for reasons of cost and simplicity of manufacturing.

The display 12 generally includes a holographic diffuser 34 configured to display the one or more perspectives of the plurality of scenes projected by the single projector 30. The display 12 has been demonstrated using a holographic diffuser formed of a sheet of clear acrylic material treated on one side to have a translucent appearance that is available from Art-Friend, 391 Orchard Road, #04-20M, Ngee Ann City, Singapore 238872; Part numbers:_AF463095 ACRYLIC SHT MATT CLEAR 3MM 9X12IN or AF4630951 ACRYLIC SHT MATT CLEAR 3MM 12X18IN. Alternatively, the holographic diffuser 34 may be similar to that described in United States Patent 4,799,739 to Newswanger, titled REAL TIME AUTOSTEREOSCOPIC DISPLAYS USING HOLOGRAPHIC DIFFUSERS, issued January 24, 1989; or United States Patent 5,609,939 to Peterson et al., titled VIEWING SCREEN FORMED USING COHERENT LIGHT, issued March 11, 1997. Typically, the holographic diffuser 34 will serve as a display surface 36 of the display 12 when installed in the vehicle 10. It is recognized that the display surface 36 may alternatively be part of or include a touch sensitive screen.

The display 12 generally includes a mirror arrangement 38 positioned in the projection field 32. The mirror arrangement 38 is generally configured to reflect the one or more perspectives of the plurality of scenes projected by the single projector 30 toward the holographic diffuser 34 from distinct directions, wherein the directions are such that a distinct 2D or 3D image can be perceived by each of the plurality of persons viewing the display from distinct locations. In this non-limiting example, the mirror arrangement is illustrated as including a first mirror pair 40 configured to reflect images projected by the single projector 30 toward the first person 16; a second mirror pair 42 configured to reflect images projected by the single projector 30 toward the second person 20; and a third mirror pair 44 configured to reflect images projected by the single projector 30 toward the third person 54.

In one embodiment, the mirror arrangement 38 may be formed of fixed mirrors, and the fixed mirrors may be flat (planar) or curved. The shape of the fixed mirrors is determined by the relative locations of the single projector 30, the mirror arrangement 38, and the persons (16, 20, 54) viewing the display, as will be understood by those skilled in the art. As suggested above, each mirror pair may instead be an array of fixed mirrors so that as a person moves about, the perspective received by each eye changes and so the apparent perspective seen by the person also changes. As such, the mirror arrangement may include a plurality of fixed mirrors arranged to reflect the one or more perspectives of the plurality of scenes projected by the single projector toward a predetermined location such as the first location 26 or the second location 28.

Alternatively, the display 12 may be coupled to a camera 46 by way of a controller 48 to form an eye tracking system that can be used to compensate for movement of a person's eyes. For example, each of the mirrors in the mirror arrangement 38 may be shaped so that by adjusting the projected direction from the single projector 30 into the projection field 32, changes in the location of each eye can be compensated for. The controller 48 may include a processor such as a microprocessor or other control circuitry as should be evident to those in the art. The controller 48 may include memory, including non-volatile memory, such as electrically erasable programmable read-only memory (EEPROM) for storing one or more routines, thresholds and captured data. The one or more routines may be executed by the processor to perform steps tracking eye motion, determining what is projected by the single projector 30 as described herein

Alternatively, each of the mirrors in the mirror arrangement 38 may be coupled to an electro-mechanical device 50 such as a piezoelectric device operated by the controller 48 so that each of the mirrors can be articulated to reflect the one or more perspectives of the plurality of scenes projected by the single projector 30 toward a location of a person viewing the display. Such electromechanical mirrors and their equivalents are commercially available.

Accordingly, a multiple viewer display 12 is provided. The display 12 is able to project distinct, independent, 2D or 3D images to a variety of persons so each person can see a different image, and can view 3D images without wearing special glasses.

While this invention has been described in terms of the preferred embodiments thereof, it is not intended to be so limited, but rather only to the extent set forth in the claims that follow.

## Claims

1. A multiple viewer display (12) configured to display one or more perspectives of a plurality of scenes toward a corresponding plurality of locations (26, 28) in order to provide each of a corresponding plurality of persons (16, 20, 54) viewing the display (12) a distinct two-dimensional (2D) or three-dimensional (3D) image (14, 18), said display (12) comprising:
a single projector (30) configured to project the one or more perspectives of the plurality of scenes into a projection field (32);
a holographic diffuser (34) configured to display the one or more perspectives of the plurality of scenes projected by the single projector (30); and
a mirror arrangement (38) positioned in the projection field (32), said mirror arrangement (38) configured to reflect the one or more perspectives of the plurality of scenes projected by the single projector (30) toward the holographic diffuser (34) from distinct directions, wherein the directions are such that a distinct 2D or 3D image (14, 18) is perceived by each of the plurality of persons (16, 20, 54) viewing the display (12) from distinct locations (26).

2. The display (12) in accordance with claim 1, wherein the mirror arrangement (38) comprises a plurality of fixed mirrors (40, 42, 44) arranged to reflect the one or more perspectives of the plurality of scenes projected by the single projector (30) toward a predetermined location.

3. The display (12) in accordance with claim 1, wherein the mirror arrangement (38) comprises a plurality of articulated mirrors (40, 42, 44) configured to reflect the one or more perspectives of the plurality of scenes projected by the single projector (30) toward the holographic diffuser (34), wherein the mirrors are articulated to direct the reflection toward a location of a person viewing the display (12).
